# EUROPÄISCHE PATENTSCHRIFT

(11) **EP 2 690 404 B1**
(45) Veröffentlichungstag und Bekanntmachung des Hinweises auf die Patenterteilung: **09.01.2019**
(21) Anmeldenummer: 12177524.1
(22) Anmeldetag: 23.07.2012
(51) Int. Cl.: G01C 21/36

(54) **Erstellen eines Geofences**
Creation of a geofence
Création d'une barrière virtuelle de géolocalisation

(43) Veröffentlichungstag der Anmeldung: 29.01.2014
(73) Patentinhaber: Deutsche Post AG, 53113 Bonn (DE)
(72) Erfinder: Josefiak, Frank, 53177 Bonn (DE); Petkov, Filip, 50968 Köln (DE)
(74) Vertreter: Michalski Hüttermann & Partner Patentanwälte mbB

(56) Entgegenhaltungen:
- EP-A2- 1 557 807
- WO-A1-2011/000060
- WO-A1-2011/057273
- WO-A1-2012/019628
- US-A1- 2012 008 526
- US-A1- 2012 172 027

## Beschreibung

Die vorliegende Erfindung betrifft ein Verfahren zum automatischen Erstellen eines Geofences. Weiterhin betrifft die Erfindung ein digitales Speichermedium mit elektronisch auslesbaren Steuersignalen, wobei die Steuersignale so mit einer Datenverarbeitungsvorrichtung zusammenwirken können, dass das obige Verfahren ausgeführt wird. Zusätzlich betrifft die Erfindung ein Computer-Programm-Produkt mit auf einem maschinenlesbaren Träger gespeichertem Programmcode zur Durchführung des obigen Verfahrens, wenn der Programmcode auf einer Datenverarbeitungsvorrichtung ausgeführt wird. Ferner betrifft die Erfindung ein Computer-Programm mit Programmcode zur Durchführung des obigen Verfahrens, wenn das Programm auf einer Datenverarbeitungsvorrichtung abläuft.

Ein Geofence kann verstanden werden als ein beliebiger, geschlossener, geographischer Bereich. Der Bereich kann sowohl ein zwei-dimensionaler Bereich auf einer Karte sein, beispielsweise ein Tankstellengelände oder ein Parkplatz auf einem Logistikhof, oder auch ein drei-dimensionaler Bereich, beispielsweise ein Flughafen mit einer Einflugschneise oder ein Flugkorridor. Prinzipiell kann ein Geofence auch ein ganzes Land oder einen Kontinent umfassen. Geofences haben beispielsweise große Auswirkungen im Bereich der Logistik, wo sie die Planung von Routen als auch die Unterstützung von kritischen Prozessen und Abläufen beeinflussen können. Prinzipiell unterstützen Geofences die Verfolgung aller beliebigen Objekte. In der Logistik werden Geofences beispielsweise für die Markierung von Bereichen verwendet, welche für Disponenten von großer Wichtigkeit sind bzw. die Verfolgung von Transportmitteln (Assets) oder Transportgütern (Shipments) in diesen Bereichen ermöglichen. Dazu lassen sich durch digitale Geofences basierend auf unterschiedlichen Ereignissen, die beispielsweise die Einfahrt oder die nicht Einfahrt in den Geofence, die Ausfahrt oder die nicht Ausfahrt aus dem Geofence, eine Aufenthaltsdauer in dem Geofence oder das Erreichen/Nichterreichen eines Geofences in einem bestimmten Zeitfenster umfassen, jeweils unterschiedliche Benachrichtigungen definieren und an einen beliebigen Empfängerkreis versenden. Diese Benachrichtigungen können Nachrichten umfassen wie "ein LKW ist in ein kritisches Gebiet eingefahren" oder "ein Schiff hat den Hafen verlassen".

Bis heute werden Geofences manuell definiert. Dazu werden beispielsweise auf einer Karte manuell Grenzen gezogen, die den Geofence definieren, was einen sehr hohen Aufwand und damit Kosten mit sich bringt. Die Definition und Speicherung von Geofences findet mithilfe von Positionsdaten, beispielsweise Längengrad und Breitengrad, statt. Die Geofences werden dann für die Anwendung digital gespeichert.

Insbesondere wenn viele Geofences erstellt werden sollen, ist das manuelle Verfahren für die Erstellung von Geofences wegen des hohen Aufwands ungeeignet. Es müssen alle identifizierten Geopositionen auf der Karte gesucht werden und manuell angepasst werden. Die Ausgangspositionen können beispielsweise durch Tankstellen, Flughäfen, Häfen, Distributionszentren oder ähnliches definiert sein, genauso wie durch Länder oder Städte. Ein Bearbeiter zur Erstellung eines Geofences muss dazu die Ausgangsposition auf einer Karte aufrufen, anschließend auf der Karte visuell die Grenzen für den Geofence erkennen und manuell die Grenzen des Geofences erstellen. Ein zusätzliches Problem kann darin bestehen, dass die Ausgangsposition unvollständig oder fehlerbehaftet sein kann, wodurch ausgehend von der Karte ein ungeeigneter Geofence erzeugt werden kann. Da die Erstellung des Geofences basierend auf der Karte erfolgt, kann der Geofence abhängig von einer ausgewählten Karte sein. So kann der Geofence abhängig von verschiedenen verwendeten Karten variieren.

Aus der US 2012/008 526 A1 ist die Bildung und Überwachung einer gemeinsamen Ortsgruppe bekannt. Dazu kann ein Geofence definiert werden, welcher auf aktuellen geographischen Positionen von Mobilgeräten basiert. Es wird eine Grenze eines gemeinsamen Abdeckungsbereichs gebildet, der die aktuellen Positionen umfasst, wobei die Grenze des gemeinsamen Abdeckungsbereichs den Geofence definiert.

Aus der WO 2011/000 060 A1 ist ein funkaktiviertes Gefahrenwarnsystem bekannt, bei dem ein codiertes Signal an eine Mehrzahl geographischer Zonen, die als Geofences definiert sind, übertragen wird.

Die WO 2011/057273 A1 betrifft Location-based tracking basierend auf Geofences. Zur Anpassung eines Geofences kann basierend auf Positionsinformationen von diesem ein Abschnitt abgeschnitten werden kann.

Außerdem ist aus der WO 2012/019628 A1 bekannt, dass Parkplatzpositionen und -geometrien von Sondendaten unterschieden und mit einer digitalen Karte zur Verwendung in der Navigation und anderen kartenbezogenen Aktivitäten integriert werden. Die Schritte dieses Verfahrens umfassen das Identifizieren der Positionen in den Sondendaten, wo Autos wahrscheinlich geparkt sind, Erfassen der Positionen von Parkplätzen, Bestimmen der Ausdehnung und Form der erkannten Parkplätze und Einstellen der Parkplätze in das Straßennetz. Der Parkplatz kann klassifiziert und zusätzliche Attribute berechnet werden. Schließlich wird eine topologische Verbindung des Parkplatzes mit dem Straßennetz hergestellt, in dem die Ein- und Ausgänge identifiziert werden.

Weiterhin ist aus der EP 1 557 807 A2 ein allgemeines Verfahren und System zur Ortung eines überwachteten Geräts und zur Überwachung der Befolgung einer Route mittels Geofencing bekannt.

Auch ist aus der US 2012/172027 A1 ein Geofence-Dienst bekannt, der verschiedene Fernsteuerungs- und automatische Operationen auf der Grundlage der aktuellen geografischen Position eines Benutzers ermöglicht, die durch einen aktuellen geographischen Standort des mobilen Geräts des Benutzers bestimmt wird. Der Geofence-Dienst ermöglicht dem Benutzer, einen oder mehrere Geofences basierend auf bestimmten geografischen Standorten zu definieren. Solche Geofences können gegen verschiedene Geofence-Anwendungen zur Fernsteuerung und automatischen Steuerung von Geräten angewendet werden. Die die Lautstärke- oder Leistungssteuerungseinstellungen des mobilen Geräts werden basierend auf dem Standort des Benutzers innerhalb oder außerhalb eines Geofence angepasst. Auch wird die Temperatureinstellung eines Gebäudes oder Hauses basierend auf der Nähe des Benutzers zu einem Geofence gesteuert. Ebenfalls werden elektrische Geräte in einem Heim basierend auf dem aktuellen geographischen Standort des Benutzers automatisch aktiviert und gesteuert.

Ausgehend von dem oben genannten Stand der Technik liegt der Erfindung somit die Aufgabe zugrunde, ein Verfahren zur Erstellung eines Geofences anzugeben, das eine automatische Erstellung von Geofences ermöglicht, einfach anzuwenden ist, Geofences mit einer hohen Genauigkeit liefert und eine Fehlertoleranz gegenüber fehlerhaften Ausgangspositionen aufweist.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit ein Verfahren zum automatischen Erstellen eines Geofences vorgesehen, umfassend die Schritte Erfassen einer Ausgangsposition, Übertragen der Ausgangsposition auf eine digitale Karte, automatisches Erstellen eines Flächenobjekts auf der digitalen Karte, wobei das Flächenobjekt die Ausgangsposition umfasst, Erfassen von Bewegungsdaten wenigstens eines beweglichen Objekts im Bereich des Flächenobjekts, wobei die Bewegungsdaten eine Geschwindigkeit und/der eine Bewegungsrichtung des beweglichen Objekts umfassen, und automatisches Reduzieren des Flächenobjekts zu dem Geofence basierend auf den Bewegungsdaten, wobei der Schritt des Erfassens einer Ausgangsposition das Auswählen eines point of interest umfasst.

Erfindungsgemäß ist weiterhin ein digitales Speichermedium mit elektronisch auslesbaren Steuersignalen angegeben, wobei die Steuersignale so mit einer Datenverarbeitungsvorrichtung zusammenwirken können, dass das obige Verfahren ausgeführt wird.

Erfindungsgemäß ist ebenfalls ein Computer-Programm-Produkt mit auf einem maschinenlesbaren Träger gespeichertem Programmcode zur Durchführung des obigen Verfahrens angegeben, wenn der Programmcode auf einer Datenverarbeitungsvorrichtung ausgeführt wird.

Erfindungsgemäß ist auch ein Computer-Programm mit Programmcode zur Durchführung des obigen Verfahrens angegeben, wenn das Programm auf einer Datenverarbeitungsvorrichtung abläuft.

Grundidee der vorliegenden Erfindung ist es also, durch das Erfassen von Bewegungsdaten wenigstens eines beweglichen Objekts ein automatisches Erzeugen des Geofences zu ermöglichen. Insbesondere für die Erzeugung von einer Vielzahl Geofences ist dieses Verfahren damit gut geeignet. Durch die Bewegungsdaten kann der Geofence zusätzlich mit einer hohen Genauigkeit erzeugt werden. Auch weist dieses Verfahren eine hohe Toleranz gegenüber einer ungenauen und sogar einer unkorrekten Ausgangsposition auf, da zumindest innerhalb des Flächenobjekts durch die Bewegungsdaten eine exakte Erstellung des Geofences unabhängig und ohne weitere Berücksichtigung der Ausgangspostion erfolgen kann. Durch die Verwendung von Bewegungsdaten von mehreren beweglichen Objekten oder eines beweglichen Objekts, welche sich mehrfach im Bereich des Flächenobjekts bewegt hat, kann der Geofence sehr detailliert erstellt werden. Die "points of interest" (POI) umfassen üblicherweise eine geographische Angabe, die einfach als Ausgangsposition verwendet oder in eine Ausgangsposition umgewandelt werden kann, und üblicherweise einen Positionstyp, beispielsweise "Tankstelle". Verschiedenste Arten von POIs sind verfügbar, so dass mit geringem Aufwand unter Verwendung solcher verfügbaren Informationen Geofences erstellt werden können. Ein bewegliches Objekt kann ein beliebiges Objekt sein, dessen Bewegung erfasst werden kann. Beispielsweise können die beweglichen Objekte beliebige Verkehrsmittel sein, die einen GPS-Empfänger aufweisen und ausgeführt sind, ihre Position im Betrieb zu übertragen. Die Verkehrsmittel können PKW, LKW, Busse, Schiffe und ähnliches umfassen. Prinzipiell können die beweglichen Objekte aber auch unabhängig von den Verkehrsmitteln sein und lediglich mit ihnen mitgeführt werden, beispielsweise ein Mobiltelefon mit einem GPS-Empfänger. Die Erfassung der Bewegungsdaten kann aber auch durch eine externe Überwachung der beweglichen Objekte erfolgen. Die zuvor genannten Mobiltelefone können beispielsweise durch den Netzbetreiber überwacht werden, so dass ihre Position über GSM Triangulation, über Funkzellenortung und/oder über WLAN-Ortung ermittelt werden kann. Auch können Fahrzeuge über Mobiltelefone können beispielsweise durch den Netzbetreiber überwacht werden, so dass ihre Position über GSM Triangulation, über Funkzellenortung und/oder über WLAN-Ortung ermittelt werden kann. Auch können Fahrzeuge über ein eindeutiges Kennzeichen, z.B. ihr Nummernschild, erkannt werden, welches an vorgegebenen Positionen ausgelesen wird, wobei gleichzeitig beispielsweise eine Geschwindigkeit des Fahrzeugs erfasst werden kann. Das Erfassen von Bewegungsdaten des wenigstens eines beweglichen Objekts im Bereich des Flächenobjekts kann prinzipiell zu einem beliebigen Zeitpunkt erfolgen. Die Erfassung kann global erfolgen, indem die beweglichen Objekte permanent überwacht werden. Es erfolgt dann zur Erstellung des Geofences eine Auswahl von Bewegungsdaten, die das Flächenobjekt betreffen.

Die digitale Karte kann dabei als abstrakte Darstellung nach der Art einer Strassenkarte, einer Geländekarte oder Ähnlichem oder als realistische Darstellung nach der Art eines Satellitenfotos oder eine Kombination davon ausgeführt sein. Das Flächenobjekt kann prinzipiell eine beliebige Form haben. Bevorzugt weist das Flächenobjekt eine geometrische Standardform auf, beispielsweise einen Kreis, ein Dreieck, ein Viereck oder ähnliches. Besonders bevorzugt ist die Ausgangsposition das Zentrum des Flächenobjekts. Die Bewegungsdaten umfassen eine Position sowie eine Geschwindigkeit und/der eine Bewegungsrichtung des jeweiligen beweglichen Objekts. Geschwindigkeit und Richtung des jeweiligen beweglichen Objekts können alternativ aus einer zeitlichen Abfolge von Positionsdaten ermittelt werden.

Das Verfahren ist ein digitales Verfahren, welches üblicherweise mit einer Datenverarbeitungsvorrichtung, beispielsweise einem Computer, durchgeführt wird.

In vorteilhafter Ausgestaltung der Erfindung ist das Verfahren derart weitergebildet, dass der Schritt des automatischen Reduzierens des Flächenobjekts zu dem Geofence das Erkennen von Bereichen, die von dem Geofence umfasst werden, beinhaltet. Es erfolgt in anderen Worten eine positive Erkennung von Bereichen des Flächenobjekts, die zu dem Geofence gehören. Verschiedene Verfahren zur positiven Erkennung sind dabei möglich. Vorzugsweise werden Bereiche, in denen sich das wenigstens eine bewegliche Objekt aufgehalten hat, zu dem Geofence hinzugerechnet.

Besonders bevorzugt werden Bereiche, in denen sich das wenigstens eine bewegliche Objekt mit mindestens einer vorgegebenen Grenzgeschwindigkeit bewegt hat, zu dem Geofence hinzugerechnet. Beispielsweise kann eine Grenzgeschwindigkeit von mehr als 60 km/h auf eine Autobahn hinweisen, so dass die Bereiche, in denen sich das wenigstens eine bewegliche Objekt mit einer für LKW typischen Geschwindigkeit von 80 km/h bewegt hat, zu dem Geofence hinzugerechnet werden, wenn der Geofence beispielsweise die Autobahn betrifft. Alternativ können andere Grenzgeschwindigkeiten gewählt sein, beispielsweise 0 km/h für eine Bewegung, 7 km/h für eine Schrittgeschwindigkeit, 30 km/h oder 50 Km/h für Geschwindigkeiten in einer Ortschaft, 60 km/h für eine Landstraße, 80 km/h für eine Autobahn oder 90 km/h für ein überschreiten der erlaubten Geschwindigkeit bei einem LKW. Weiter bevorzugt ist ein Korridor mit einer oberen und einer unteren Grenzgeschwindigkeit gebildet.

In vorteilhafter Ausgestaltung der Erfindung ist das Verfahren derart weitergebildet, dass der Schritt des automatischen Reduzierens des Flächenobjekts zu dem Geofence das Erkennen von Bereichen außerhalb des Geofences beinhaltet. Es erfolgt in anderen Worten eine negative Erkennung von Bereichen des Flächenobjekts, die nicht zu dem Geofence gehören. Verschiedene Verfahren zur negativen Erkennung sind dabei möglich. Vorzugsweise werden Bereiche, in denen sich das wenigstens eine bewegliche Objekt nicht aufgehalten hat, von dem Geofence nicht umfasst. Besonders bevorzugt werden Bereiche, in denen sich das wenigstens eine bewegliche Objekt mit mindestens einer vorgegebenen Grenzgeschwindigkeit bewegt hat, von dem Geofence nicht umfasst. Beispielsweise kann eine Grenzgeschwindigkeit von mehr als 60 km/h auf eine Autobahn hinweisen, so dass die Bereiche, in denen sich das wenigstens eine bewegliche Objekt mit einer für LKW typischen Geschwindigkeit von 80 km/h bewegt hat, von dem Geofence nicht umfasst werden, wenn der Geofence beispielsweise eine Autobahntankstelle betrifft. Alternativ können andere Grenzgeschwindigkeiten gewählt sein, beispielsweise 0 km/h für eine Bewegung, 7 km/h für eine Schrittgeschwindigkeit, 30 km/h oder 50 Km/h für Geschwindigkeiten in einer Ortschaft, 60 km/h für eine Landstraße, 80 km/h für eine Autobahn oder 90 km/h für ein überschreiten der erlaubten Geschwindigkeit bei einem LKW. Weiter bevorzugt ist ein Korridor mit einer oberen und einer unteren Grenzgeschwindigkeit gebildet.

In vorteilhafter Ausgestaltung der Erfindung ist das Verfahren derart weitergebildet, dass der Schritt des Erfassens von Bewegungsdaten wenigstens eines beweglichen Objekts im Bereich des Flächenobjekts das Erzeugen eines Bewegungsprofils des wenigstens eines beweglichen Objekts beinhaltet, und der Schritt des automatischen Reduzierens des Flächenobjekts zu dem Geofence basierend auf den Bewegungsdaten das Analysieren des Bewegungsprofils des wenigstens eines beweglichen Objekts beinhaltet. Die Bewegungsprofile können lokale Bereiche wie Wegstrecken oder Flächen, Geschwindigkeiten und/oder zeitliche Abfolgen umfassen. Durch die Analyse von Bewegungsdaten kann beispielsweise eine Tankstelle neben einer Autobahn identifiziert werden, um einen Geofence zu bilden. Der Geofence umfasst dann den Bereich, welcher sowohl im zuvor erstellten Geofence liegt plus die Bereiche in dem Flächenobjekt, in denen die beweglichen Objekte eine Geschwindigkeitsreduktion auf Null erfahren und für mindestens 60 Sekunden anhalten. Dies ist entsprechend der Bereich der Autobahntankstelle selbst. Bereiche, in welchen die Geschwindigkeit um den Haltepunkt kleiner als 7 km/h war, werden als An- und Abfahrt zu dem Geofence hinzugefügt. Ein weiter entwickeltes Bewegungsprofil für die Tankstelle kann das langsame Reduzieren der Geschwindigkeit bis auf Null, einen anschließenden Stillstand mit einer vorgegebenen Dauer und ein abschließendes Beschleunigen beinhalten. Damit kann die Tankstelle sicher von einem Rastplatz abgegrenzt werden, an dem die Aufenthaltsdauer üblicherweise länger als die vorgegebene Dauer ist. Somit ist die Zuordnung eines beweglichen Objekts zu einem Geofence mit einer hohen Zuverlässigkeit möglich.

In vorteilhafter Ausgestaltung der Erfindung ist das Verfahren derart weitergebildet, dass das Verfahren den Schritt des Erfassens eines Positionstyps zu der Ausgangsposition umfasst, und der Schritt des automatischen Reduzierens des Flächenobjekts zu dem Geofence basierend auf den Bewegungsdaten das Auswerten der Bewegungsdaten abhängig von dem Positionstyp umfasst. Für Ausgangspositionen können verschiedenartige Geofences angelegt werden, die durch die Bewegungsdaten auf unterschiedliche Weise ermittelt werden können. Wie zuvor ausgeführt kann eine Autobahn durch eine Geschwindigkeit des wenigstens einen beweglichen Objekts größer als 60 km/h erfasst werden, während in einen städtischen Bereich die Geschwindigkeit auf 50 km/h begrenzt ist. Auch können sich verschiedenartige bewegliche Objekte unterschiedlich bewegen. In einem Hafen bewegen sich Schiffe üblicherweise mit nur wenigen, langsamen Richtungsänderungen, während Landfahrzeuge eine höhere Geschwindigkeit mit schnellen Richtungsänderungen aufweisen. Entsprechend kann beispielsweise ein Hafenbecken anhand eines entsprechenden Bewegungsprofils leicht zum Erstellen eines Geofences identifiziert werden.

In vorteilhafter Ausgestaltung der Erfindung ist das Verfahren derart weitergebildet, dass das Verfahren den Schritt des Erfassens eines Positionstyps zu der Ausgangsposition umfasst, und der Schritt des automatischen Erstellens eines Flächenobjekts auf der digitalen Karte das Erstellen des Flächenobjekts abhängig von dem Positionstyp umfasst. Somit kann das Flächenobjekt angepasst werden, um einerseits die Erzeugung des Geofences zu beschleunigen, indem keine irrelevanten Bereiche bearbeitet werden, und andererseits das Aussparen von relevanten Bereichen vermieden wird. Beispielsweise ist ein Geofence für eine Tankstelle üblicherweise kleiner als einer für einen Containerhafen. Vorzugsweise wird jeweils ein gleichförmiges Flächenobjekt verwendet, dessen Größe abhängig von dem Positionstyp ausgewählt wird. Alternativ oder zusätzlich kann die Form des Flächenobjekts abhängig von dem Positionstyp gewählt werden.

In vorteilhafter Ausgestaltung der Erfindung ist das Verfahren derart weitergebildet, dass der Schritt des Erfassens einer Ausgangsposition das Empfangen einer geographischen Angabe umfasst. Die geographische Angabe kann unterschiedlich ausgebildet sein, beispielsweise als Koordinatenpaar zur direkten Zuordnung auf der Karte. In einer alternativen Ausführungsform, die nicht unter den vorliegenden Hauptanspruch fällt, kann ein Standort eines beweglichen Objekts zu einem bestimmten Zeitpunkt als Ausgangsposition erfasst werden.

In vorteilhafter Ausgestaltung der Erfindung ist das Verfahren derart weitergebildet, dass der Schritt des Empfangens einer geographischen Angabe das Empfangen einer abstrakten Kartenangabe und das Umwandeln der abstrakten Kartenangabe in die Ausgangsposition umfasst. Die abstrakte Kartenangabe kann beispielsweise eine Adresse oder eine Landmarke sein. Eine Adresse kann beispielsweise durch einen "Reverse Address Service" in Positionsdaten für die Ausgangsposition umgerechnet werden. Vorzugsweise wird somit die Ausgangsposition zunächst ohne Verwendung der Karte festgelegt. Eine Mehrzahl Geofences kann ausgehend auf einem automatischen Einlesen von einer Mehrzahl Adressen einfach erstellt werden, da ein manuelles Erfassen der Ausgangsposition entfällt.

In vorteilhafter Ausgestaltung der Erfindung ist das Verfahren derart weitergebildet, dass der Schritt des automatischen Erstellens eines Flächenobjekts auf der digitalen Karte das automatische Erzeugen des Flächenobjekts auf der Karte basierend auf Karteninhalten umfasst. Somit kann das Flächenobjekt bereits mit einer guten Genauigkeit erstellt werden, und der Aufwand für die Reduktion zu dem Geofence ist gering. Die Karteninhalte können unterschiedliche Inhalte abhängig von der verwendeten Karte sein. Im Allgemeinen können die Karteninhalte über unterschiedliche farbliche Ausgestaltungen unterschieden werden, beispielsweise blau für einen See oder Fluss. Auch eine Straße bzw. ein Gebäude können jeweils eine unterschiedliche Farbe aufweisen, wodurch diese Bereiche automatisch unterschieden werden können.

In vorteilhafter Ausgestaltung der Erfindung ist das Verfahren derart weitergebildet, dass der Schritt des automatischen Erzeugens des Flächenobjekts auf der Karte basierend auf Karteninhalten folgende Schritte umfasst: Erfassen einer Kartenfarbe an der Ausgangsposition, Erfassen eines ersten Begrenzungspunktes des Flächenobjekts durch das Erfassen der Änderung der Farbe der Karte bezogen auf die Kartenfarbe an der Ausgangsposition, Erfassen wenigstens eines weiteren Begrenzungspunktes des Flächenobjekts durch das Erfassen der Änderung der Farbe der Karte bezogen auf die Kartenfarbe an der Ausgangsposition in einem vorgegebenen Abstand von dem jeweils vorherigen Begrenzungspunkt, Erzeugen des Flächenobjekts durch Verbinden der Begrenzungspunkte. Durch dieses Verfahren wird das Flächenobjekt durch die Farbänderung auf der Karte ausgehend von der Farbe der Ausgangsposition definiert. Das Verfahren kann abhängig von einer gewünschten Genauigkeit des Geofence für eine unterschiedliche Anzahl Begrenzungspunkte durchgeführt werden. Alternativ können auch andere Verfahren angewendet werden.

In vorteilhafter Ausgestaltung der Erfindung ist das Verfahren derart weitergebildet, dass der Schritt des automatischen Erzeugens des Flächenobjekts auf der Karte basierend auf Karteninhalten das automatisches Erstellen eines Begrenzungsobjekts auf der digitalen Karte beinhaltet, wobei das Begrenzungsobjekt die Ausgangsposition umfasst, und der Schritt des Bestimmens einer Grenze des Flächenobjekts durch umfängliches Erfassen der Änderung der Farbe der Karte auf das Begrenzungsobjekt begrenzt ist. Das Begrenzungsobjekt kann ein geometrisches Objekt sein, beispielsweise ein Kreis oder ein Viereck, in dem sich die Ausgangsposition befindet, so dass das automatische Erzeugen des Flächenobjekts auf der Karte auf das geometrische Objekt begrenzt werden kann. Prinzipiell ist jedoch auch eine Erweiterung des geometrischen Objekts zu dem Flächenobjekt möglich.

Nachfolgend wird die Erfindung unter Bezugnahme auf die anliegende Zeichnung anhand bevorzugter Ausführungsformen näher erläutert.

Es zeigen
- Fig. 1: eine Ansicht eines Geofence als Kreis,
- Fig. 2: eine Ansicht eines Geofence als Viereck,
- Fig. 3: eine Ansicht eines Geofence als Straße, und
- Fig. 4: ein Ablaufdiagram zur Durchführung des erfindungsgemäßen Verfahrens.

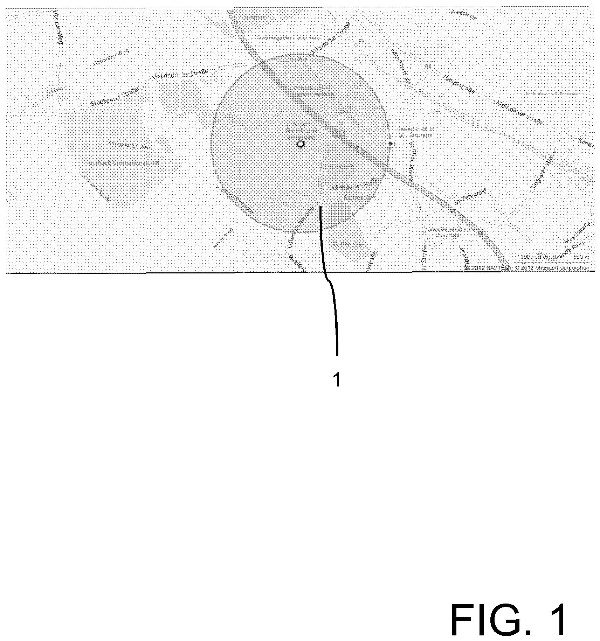

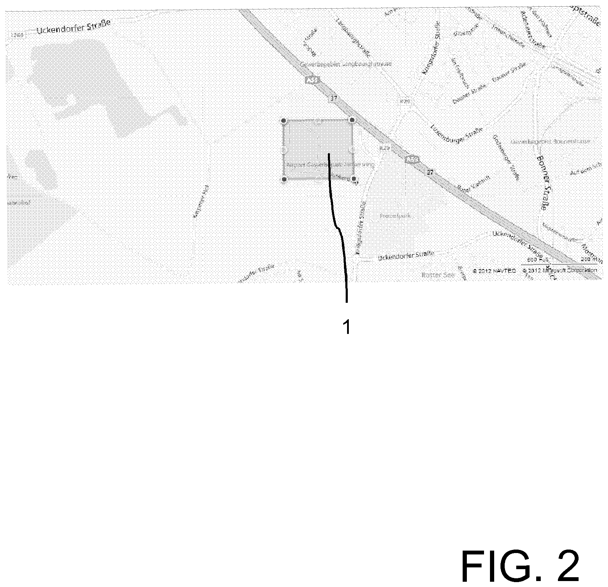

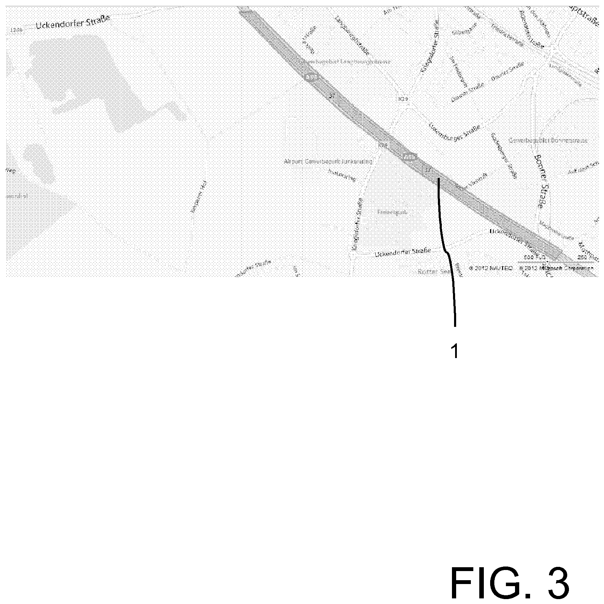

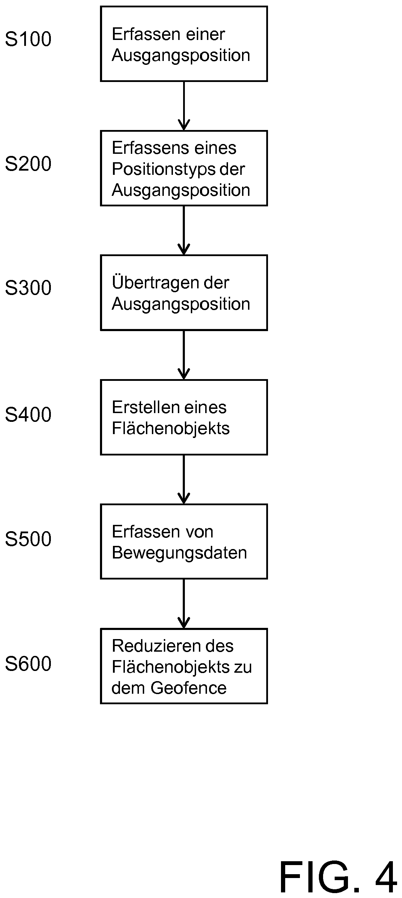

Die Figur 4 zeigt einen Ablauf des erfindungsgemäßen Verfahrens zum automatischen Erstellen eines Geofences 1. Verschiedene Geofences 1 sind in den Figuren 1 bis 3 gezeigt.

Das Verfahren beginnt in Schritt S100 mit dem Erfassen einer Ausgangsposition. Entsprechend wird eine geographische Angabe empfangen, die in diesem Ausführungsbeispiel als abstrakte Kartenangabe eine Adresse ist. Die Adresse wird durch einen "Reverse Address Service" in Positionsdaten in der Form eines Koordinatenpaares für die Ausgangsposition umgerechnet.

In Schritt S200 erfolgt das Erfassen eines Positionstyps zu der Ausgangsposition. Das Erfassen des Positionstyps beinhaltet eine Benutzereingabe. Die Ausgangsposition wird in diesem Ausführungsbeispiels als zu einer Autobahntankstelle gehörend definiert, so dass der Positionstyp "Autobahntankstelle" ist.

In einem alternativen Ausführungsbeispiel sind die Schritte S100 und S200 zusammengefasst. Entsprechend wird ein "point of interest" (POI) mit einer geographischen Angabe, die der Ausgangsposition entspricht, und einem Positionstyp ausgewählt.

In Schritt S300 wird die Ausgangsposition auf eine digitale Karte übertragen. Das die Ausgangsposition definierende Koordinatenpaar wird dabei direkt auf der Karte zugeordnet. Die digitale Karte beinhaltet in diesem Ausführungsbeispiel ein abstrakte Darstellung in der Form einer Straßenkarte.

Schritt S400 umfasst das automatische Erstellen eines Flächenobjekts auf der digitalen Karte, wobei das Flächenobjekt die Ausgangsposition umfasst. In diesem Ausführungsbeispiel hat das Flächenobjekt die Form eines Kreises, wobei die Ausgangsposition das Zentrum des Kreises ist. Abhängig von dem Objekttyp hat der Kreis einen unterschiedlichen Radius r, z.B. für einen Parkplatz r = 5m, für eine Tankstelle r = 50m, für ein Depot r = 700m oder für einen Flughafen r = 3000m.

Für das Verfahren werden Bewegungsdaten erfasst, indem die beweglichen Objekte permanent überwacht werden. Bewegliche Objekte sind in diesem Ausführungsbeispiel Landfahrzeuge, die einen GPS-Empfänger aufweisen und ausgeführt sind, ihre Bewegungsdaten im Betrieb zur Sammlung an eine Datenverarbeitungsvorrichtung zu übertragen. Die Bewegungsdaten umfassen eine zeitliche Abfolge von Positionen der beweglichen Objekte, aus der die Geschwindigkeit der jeweiligen beweglichen Objekte ermittelt wird.

In Schritt S500 werden Bewegungsdaten von einer Mehrzahl beweglicher Objekte im Bereich des Flächenobjekts erfasst. Es erfolgt aus den zuvor erfassten Bewegungsdaten eine Auswahl der Bewegungsdaten, die das Flächenobjekt betreffen. Aus den Bewegungsdaten der beweglichen Objekte werden Bewegungsprofile erzeugt, die zeitliche Abfolgen aus Abbremsen, Anhalten und Beschleunigen umfassen.

In Schritt S600 erfolgt ein automatisches Reduzieren des Flächenobjekts zu dem Geofence basierend auf den Bewegungsdaten. Dazu werden Bereiche, die von dem Geofence umfasst werden, und Bereiche außerhalb des Geofences erkannt. So werden zunächst Bereiche, in denen sich kein bewegliches Objekt aufgehalten hat, als nicht zu dem Geofence gehörend markiert. Weiterhin werden abhängig von dem hier ausgewählten Objekttyp "Autobahntankstelle" Bereiche, in denen sich die beweglichen Objekte mit mehr als einer Grenzgeschwindigkeit von 60 km/h bewegt haben, als nicht zu dem Geofence gehörend markiert. Dabei ist ein räumlicher Abstand zu der Ausgangsposition innerhalb des Flächenobjekts unerheblich. Alternativ kann die Grenzgeschwindigkeit für andere Objekttypen unterschiedlich gewählt sein, beispielsweise 0 km/h für eine Bewegung, 7 km/h für eine Schrittgeschwindigkeit, 30 km/h oder 50 Km/h für Geschwindigkeiten in einer Ortschaft, 60 km/h für eine Landstraße, 80 km/h für eine Autobahn oder 90 km/h für ein überschreiten der erlaubten Geschwindigkeit bei einem LKW. In einer weiter alternativen Ausführungsform ist ein Korridor mit einer oberen und einer unteren Grenzgeschwindigkeit gebildet.

Zusätzlich werden Bewegungsprofile der beweglichen Objekte erzeugt und analysiert. Für den hier verwendeten Objekttyp "Autobahntankstelle" umfasst das Bewegungsprofil in diesem Ausführungsbeispiel das langsame Reduzieren der Geschwindigkeit bis auf Null, einen anschließenden Stillstand mit einer Dauer von einer bis fünf Minuten und ein abschließendes Beschleunigen. Damit ist der Aufenthalt an der Tankstelle von dem Besuch eines Autobahnrestaurants, in dem die Aufenthaltsdauer höher ist, klar zu unterscheiden. Somit werden Bereiche gemäß des Bewegungsprofils als zu dem Geofence gehörend markiert. Abschließend wird der Geofence durch die Reduktion des Flächenobjekts auf zu dem Geofence gehörende Bereiche erstellt.

Das Verfahren endet mit dem Speichern des Geofences.

Ein Verfahren gemäß einer alternativen Ausführungsform unterscheidet sich von dem zuvor beschrieben Verfahren lediglich in dem Schritt S400. Schritt S400 gemäß der alternativen Ausführungsform umfasst das automatische Erzeugen des Flächenobjekts auf der Karte basierend auf Karteninhalten.

Entsprechend wir zunächst eine Begrenzungsobjekt auf der digitalen Karte erstellt, wobei das Begrenzungsobjekt um die Ausgangsposition zentriert ist. Im Weiteren wird die Grenze des Flächenobjekts begrenzt auf das Begrenzungsobjekt bestimmt. Das Begrenzungsobjekt ist in Übereinstimmung mit dem Flächenobjekt ein geometrisches Objekt, das in diesem Ausführungsbeispiel ein Kreis ist. Der Radius des Kreises hängt wie oben ausgeführt von dem Objekttyp ab.

Weiter wird eine Kartenfarbe an der Ausgangsposition erfasst. Ausgehend von der Ausgangsposition wird in eine Richtung auf der Karte verfahren, bis ein erster Begrenzungspunkt, an dem eine Änderung der Farbe der Karte bezogen auf die Kartenfarbe an der Ausgangsposition erfolgt, erreicht wird. Dabei wird als Änderung der Farbe nur eine signifikante Änderung betrachtet, so dass lediglich eine geringfügige Änderung, beispielsweise von einem mittleren Farbton zu demselben, abgedunkelten Farbton, nicht als Änderung betrachtet wird. Anschließend werden jeweils ausgehend von dem zuletzt erreichten Begrenzungspunkt weitere Begrenzungspunktes des Flächenobjekts durch das Erfassen der Änderung der Farbe der Karte bezogen auf die Kartenfarbe an der Ausgangsposition erfasst. Dabei wird jeweils ein weiterer Begrenzungspunkt in einem vorgegebenen Abstand von dem jeweils vorherigen Begrenzungspunkt erfasst.

Diese Prozedur wird insgesamt so oft wiederholt, bis ein Abbruchkritierium, bzw. Gütekriterium erreicht wird. Bei einem Geofence mit 100 Metern Durchmesser (R = 50m) werden hier insgesamt 8 Iterationen durchgeführt, bzw. es wird weitergerechnet, bis die Distanz des zuletzt ermittelten Begrenzungspunktes zum ersten Begrenzungspunkt kleiner 12 Metern ist.

Sobald genügend Begrenzungspunkte erfasst worden, wird das Flächenobjekts durch Verbinden der Begrenzungspunkte erzeugt.

Die oben beschriebenen Verfahren sind digitales Verfahren, die jeweils als Computer-Programm auf einer Datenverarbeitungsvorrichtung ausgeführt wird. Entsprechend ist das Datenverarbeitungsprogramm auf einem digitalen Speichermedium, hier einer Festplatte, gespeichert. Das Datenverarbeitungsprogramm umfasst elektronisch auslesbaren Steuersignale, die so mit der Datenverarbeitungsvorrichtung zusammenwirken, dass das obige Verfahren ausgeführt wird.

Das Datenverarbeitungsprogramm ist als Computer-Programm-Produkt mit auf einem maschinenlesbaren Träger gespeichertem Programmcode zur Ausführung auf der Datenverarbeitungsvorrichtung ausgeführt.

## Patentansprüche

1. Verfahren zum automatischen Erstellen eines Geofences (1), umfassend die Schritte
Erfassen einer Ausgangsposition,
Übertragen der Ausgangsposition auf eine digitale Karte,
automatisches Erstellen eines Flächenobjekts auf der digitalen Karte, wobei das Flächenobjekt die Ausgangsposition umfasst,
Erfassen von Bewegungsdaten wenigstens eines beweglichen Objekts im Bereich des Flächenobjekts, wobei die Bewegungsdaten eine Position des beweglichen Objekts und zusätzlich eine Geschwindigkeit und/oder eine Bewegungsrichtung des beweglichen Objekts umfassen, und
automatisches Reduzieren des Flächenobjekts zu dem Geofence (1) basierend auf den Bewegungsdaten, wobei
der Schritt des Erfassens einer Ausgangsposition das Auswählen eines point of interest umfasst.

2. Verfahren nach Anspruch 1, wobei
der Schritt des automatischen Reduzierens des Flächenobjekts zu dem Geofence (1) das Erkennen von Bereichen, die von dem Geofence (1) umfasst werden, beinhaltet.

3. Verfahren nach einem der Ansprüche 1 oder 2, wobei
der Schritt des automatischen Reduzierens des Flächenobjekts zu dem Geofence (1) das Erkennen von Bereichen außerhalb des Geofences (1) beinhaltet.

4. Verfahren nach einem der vorhergehenden Ansprüche, wobei
der Schritt des Erfassens von Bewegungsdaten wenigstens eines beweglichen Objekts im Bereich des Flächenobjekts das Erzeugen eines Bewegungsprofils des wenigstens eines beweglichen Objekts beinhaltet, und
der Schritt des automatischen Reduzierens des Flächenobjekts zu dem Geofence (1) basierend auf den Bewegungsdaten das Analysieren des Bewegungsprofils des wenigstens eines beweglichen Objekts beinhaltet.

5. Verfahren nach einem der vorhergehenden Ansprüche, wobei
das Verfahren den Schritt des Erfassens eines Positionstyps zu der Ausgangsposition umfasst, und
der Schritt des automatischen Reduzierens des Flächenobjekts zu dem Geofence (1) basierend auf den Bewegungsdaten das Auswerten der Bewegungsdaten abhängig von dem Positionstyp umfasst.

6. Verfahren nach einem der vorhergehenden Ansprüche, wobei
das Verfahren den Schritt des Erfassens eines Positionstyps zu der Ausgangsposition umfasst, und
der Schritt des automatischen Erstellens eines Flächenobjekts auf der digitalen Karte das Erstellen des Flächenobjekts abhängig von dem Positionstyp umfasst.

7. Verfahren nach einem der vorhergehenden Ansprüche, wobei
der Schritt des Erfassens einer Ausgangsposition das Empfangen einer geographischen Angabe umfasst.

8. Verfahren nach Anspruch 7, wobei
der Schritt des Empfangens einer geographischen Angabe das Empfangen einer abstrakten Kartenangabe und das Umwandeln der abstrakten Kartenangabe in die Ausgangsposition umfasst.

9. Verfahren nach einem der vorhergehenden Ansprüche, wobei
der Schritt des automatischen Erstellens eines Flächenobjekts auf der digitalen Karte das automatische Erzeugen des Flächenobjekts auf der Karte basierend auf Karteninhalten umfasst.

10. Verfahren nach Anspruch 9, wobei
der Schritt des automatischen Erzeugens des Flächenobjekts auf der Karte basierend auf Karteninhalten folgende Schritte umfasst:
Erfassen einer Kartenfarbe an der Ausgangsposition,
Erfassen eines ersten Begrenzungspunktes des Flächenobjekts durch das Erfassen der Änderung der Farbe der Karte bezogen auf die Kartenfarbe an der Ausgangsposition,
Erfassen wenigstens eines weiteren Begrenzungspunktes des Flächenobjekts durch das Erfassen der Änderung der Farbe der Karte bezogen auf die Kartenfarbe an der Ausgangsposition in einem vorgegebenen Abstand von dem jeweils vorherigen Begrenzungspunkt,
Erzeugen des Flächenobjekts durch Verbinden der Begrenzungspunkte.

11. Verfahren nach Anspruch 10, wobei
der Schritt des automatischen Erzeugens des Flächenobjekts auf der Karte basierend auf Karteninhalten das automatisches Erstellen eines Begrenzungsobjekts auf der digitalen Karte beinhaltet, wobei das Begrenzungsobjekt die Ausgangsposition umfasst, und
der Schritt des Bestimmens einer Grenze des Flächenobjekts durch umfängliches Erfassen der Änderung der Farbe der Karte auf das Begrenzungsobjekt begrenzt ist.

12. Digitales Speichermedium mit elektronisch auslesbaren Steuersignalen, die so mit einem programmierbaren Computersystem zusammenwirken können, dass ein Verfahren nach einem der Ansprüche 1 bis 11 ausgeführt wird.

13. Computer-Programm-Produkt mit auf einem maschinenlesbaren Träger gespeichertem Programmcode zur Durchführung des Verfahrens nach einem der Ansprüche 1 bis 11, wenn der Programmcode auf einer Datenverarbeitungsvorrichtung ausgeführt wird.

## Claims

1. A method for automatically creating a geofence (1), comprising the following steps:
detecting a starting position;
transferring the starting position to a digital map;
automatically creating an area object on the digital map, wherein the area object comprises the starting position;
detecting movement data of at least one movable object in the region of the area object, whereby the movement data comprises a position of the movable object and additionally a velocity and/or a movement direction of the movable object; and
automatically reducing the area object to form the geofence (1), on the basis of the movement data, wherein
the step of detecting a starting position includes selecting a point of interest.

2. The method according to claim 1, wherein
the step of automatically reducing the area object to form the geofence (1) includes identifying regions that are comprised by the geofence (1).

3. The method according to one of claims 1 or 2, wherein
the step of automatically reducing the area object to form the geofence (1) includes identifying regions outside the geofence (1).

4. The method according to one of the preceding claims, wherein
the step of detecting movement data of at least one movable object in the region of the area object includes generating a movement profile of the at least one movable object, and
the step of automatically reducing the area object to form the geofence (1) on the basis of the movement data includes analysing the movement profile of the at least one movable object.

5. The method according to one of the preceding claims, wherein
the method comprises the step of detecting a position type for the starting position, and
the step of automatically reducing the area object to form the geofence (1) on the basis of the movement data includes evaluating the movement data depending on the position type.

6. The method according to one of the preceding claims, wherein
the method includes the step of detecting a position type for the starting position, and
the step of automatically creating an area object on the digital map includes creating the area object depending on the position type.

7. The method according to one of the preceding claims, wherein
the step of detecting a starting position includes receiving a geographical specification.

8. The method according to claim 7, wherein
the step of receiving a geographical specification includes receiving an abstract map specification and converting the abstract map specification into the starting position.

9. The method according to one of the preceding claims, wherein
the step of automatically creating an area object on the digital map includes automatically generating the area object on the map, on the basis of map contents.

10. The method according to claim 9, wherein
the step of automatically generating the area object on the map on the basis of map contents comprises the following steps:
detecting a map colour at the starting position;
detecting a first delimitation point of the area object by detecting the change in colour of the map on the basis of the map colour at the starting position;
detecting at least one further delimitation point of the area object by detecting the change in colour of the map on the basis of the map colour at the starting position at a predefined distance from the respective previous delimitation point,
generating the area object by connecting the delimitation points.

11. The method according to claim 10, wherein
the step of automatically generating the area object on the map on the basis of map contents includes automatically creating a delimitation object on the digital map, wherein the delimitation object comprises the starting position, and
the step of determining a boundary of the area object by extensive detection of the change in colour of the map is limited to the delimitation object.

12. A digital storage medium with electronically readable control signals, which can cooperate with a programmable computer system such that a method according to one of Claims 1 to 11 is executed.

13. A computer program product with a program code, stored on a machine-readable carrier, for carrying out the method according to one of claims 1 to 11 when the program code is executed on a data processing device.

## Revendications

1. Procédé d'établissement automatique d'un périmètre géographique (1) comprenant les étapes
de détection d'une position de départ,
de report de la position de départ sur une carte numérique,
d'établissement automatique d'un objet de surface sur la carte numérique, où l'objet de surface comprend la position de départ,
de détection de données de mouvement d'au moins un objet mobile dans la zone de l'objet de surface, où les données de mouvement comprennent une position de l'objet mobile et en complément une vitesse et/ou une direction de mouvement de l'objet mobile, et
de réduction automatique de l'objet de surface par rapport au périmètre géographique (1) en se basant sur les données de mouvement, où
l'étape de détection d'une position de départ comprend le choix d'un point d'intérêt.

2. Procédé selon la revendication 1, dans lequel
l'étape de la réduction automatique de l'objet de surface contient la reconnaissance de zones qui peuvent être comprises dans le périmètre géographique (1).

3. Procédé selon la revendication 1 ou 2, dans lequel
l'étape de la réduction automatique de l'objet de surface par rapport au périmètre géographique (1) contient la reconnaissance de zones à l'extérieur du périmètre géographique (1).

4. Procédé selon l'une des revendications précédentes, dans lequel
l'étape de la détection de données de mouvement d'au moins un objet mobile dans la zone de l'objet de surface contient la génération d'un profil de mouvement de l'au moins un objet mobile, et
l'étape de la réduction automatique de l'objet de surface par rapport au périmètre géographique (1) en se basant sur les données de mouvement contient l'analyse du profil de mouvement de l'au moins un objet mobile.

5. Procédé selon l'une des revendications précédentes, dans lequel
le procédé comprend l'étape de la détection d'un type de position par rapport à la position de départ, et
l'étape de la réduction automatique de l'objet de surface par rapport au périmètre géographique (1) en se basant sur les données de mouvement comprend l'exploitation des données de mouvement en fonction du type de position.

6. Procédé selon l'une des revendications précédentes, dans lequel
le procédé comprend l'étape de la détection d'un type de position par rapport à la position de départ, et
l'étape de l'établissement automatique d'un objet de surface sur la carte numérique comprend l'établissement de l'objet de surface en fonction du type de position.

7. Procédé selon l'une des revendications précédentes, dans lequel
l'étape de la détection d'une position de départ comprend la réception d'une indication géographique.

8. Procédé selon la revendication 7, dans lequel
l'étape de la réception d'une indication géographique comprend la réception d'une indication de carte abstraite et la transformation de l'indication de carte abstraite en position de départ.

9. Procédé selon l'une des revendications précédentes, dans lequel
l'étape de l'établissement automatique d'un objet de surface sur la carte numérique comprend la génération automatique de l'objet de surface sur la carte en se basant sur des contenus de cartes.

10. Procédé selon la revendication 9, dans lequel
l'étape de la génération automatique de l'objet de surface sur la carte en se basant sur des contenus de cartes comprend les étapes suivantes :
de détection d'une couleur de carte au niveau de la position de départ,
de détection d'un premier point de délimitation de l'objet de surface par la détection de la modification de la couleur de la carte par rapport à la couleur de carte au niveau de la position de départ,
de détection d'au moins un autre point de délimitation de l'objet de surface par la détection de la modification de la couleur de la carte par rapport à la couleur de carte au niveau de la position de départ à une distance prédéfinie du point de délimitation précédent respectif,
de génération de l'objet de surface par un regroupement des points de délimitation.

11. Procédé selon la revendication 10, dans lequel
l'étape de la génération automatique de l'objet de surface sur la carte en se basant sur des contenus de cartes contient l'établissement automatique d'un objet de délimitation sur la carte numérique, où l'objet de délimitation comprend la position de départ, et
l'étape de la détermination d'une limite de l'objet de surface est limitée par la détection périphérique de la modification de la couleur de la carte pour l'objet de délimitation.

12. Support de stockage numérique doté de signaux de commande lisibles électroniquement qui peuvent agir conjointement avec un système informatique programmable de sorte qu'un procédé selon l'une des revendications 1 à 11 est exécuté.

13. Produit-programme informatique avec un code de programme stocké sur un support lisible par machine pour l'exécution d'un procédé selon l'une des revendications 1 à 11, lorsque le code de programme est exécuté sur un dispositif de traitement de données.
